# EUROPEAN PATENT APPLICATION

(11) **EP 3 718 403 A1**
(43) Date of publication of application: **07.10.2020**
(21) Application number: 19167416.7
(22) Date of filing: 04.04.2019
(51) Int. Cl.: A01N 1/02

(54) **SPERM CRYOPRESERVATION**

(71) Applicant: Centre Européen du Cheval de Mont-le-Soie asbl, 6698 Grand-Halleux (BE)
(72) Inventor: LEJEUNE, Jean-Philippe, 6698 Grand-Halleux (BE); SERTEYN, Didier, 6698 Grand-Halleux (BE); FRANCK, Thierry, 6698 Grand-Halleux (BE); BLOMMAERT, Didier, 6698 Grand-Halleux (BE)
(74) Representative: Colens, Alain M.G.M.

(57) **Abstract**

The present invention relates to an improved composition for cryopreservation of mammalian sperm, more specifically porcine, camel, bovine and equine sperm, comprising (i) a penetrating cryoprotecting agent selected within the group comprising a polyol having 4 - 7 C-atoms, and (ii) a cyclodextrin-cholesterol-complex and possibly saccharides, proteins and/or antibacterial agents, buffer compositions and antioxydants. The invention composition shows improved quality and extended preservation of quality after thawing, improved preservation of sperm fertility, allows for extended delay prior to freezing collected sperm samples and for higher sperm concentrations in the composition without affecting sperm quality after thawing.

## Description

The present invention relates to improved cryopreservation compositions (freezing compositions) for semen. More specifically, the invention provides new cryoprotectants for freezing compositions, particularly for use in cryopreservation compositions for mammalian sperm, such as porcine, camel, bovine or equine sperm.

During the cooling and freezing operation but also during thawing, the sperm cells may suffer damages of different types. A thermal shock may be generated which is associated with alteration of structure of mitochondria or acrosome. Cell membrane and intracellular structures may suffer mechanical lesions. Osmotic stress is another cause for cell damage. Further, it has been found that spermatozoa are capable of generating active oxygen species which at excessive levels may affect motility, viability and fertility. DNA may also be affected by oxidation.

The above effects may be mitigated by improvement of freezing techniques, e.g. by optimizing temperature curves and incubation times. Further research has been focusing on freezing compositions, sometimes also called extenders or diluents.

The role of the freezing composition is critical to prevent premature capacitation of spermatozoa while preserving their energy potential, motility and fertilizing ability. In this context, the preservation of the plasma membrane integrity of spermatozoa is essential during freezing and thawing operations. Spermatozoa membrane is known to be sensitive to damages due to freezing in several species. It has been found that the damage of spermatozoa is not so much due to the formation of intracellular ice crystals but rather to an osmotic imbalance during thawing.

Freezing compositions for semen generally comprise cryoprotecting agents, nutritional substrate and additives, such as additives selected from antibacterial agents, buffer compositions, antioxidants and mixtures thereof. Among the cryoprotecting agents, one may differentiate the penetrating cryoprotecting agents that penetrate the cell wall and hence provide protection within the cell, and those that remain outside the cell wall and provide extracellular protection. Among the penetrating cryoprotecting agents for use in equine semen cryopreservation, glycerol and DMSO are probably the most commonly used cryoprotectants. Known alternatives are ethylene glycol, methyl formamide and dimethylformamide. In veterinary medicine, extracellular protecting agents mostly are of animal origin and are selected from milk or milk proteins or egg yolk or phospholipids. They serve as a nutritional substrate to the spermatozoa and protect the cell wall during the freezing operation.

The use of milk proteins, egg yolk or phospholipids has a tendency to limit the concentration of spermatozoa around 150 millions by ml in the freezing composition in order to avoid a deleterious effect on the quality of the semen after thawing induced by higher concentration of spermatozoa.

Further, egg yolk may show several disadvantages, as it is a natural product having variable composition and being associated with a risk of bacterial contamination. It has thus been proposed to replace egg yolk by serum or soya lecithin. Soya lecithin nevertheless seems to induce reduced fertility. As an alternative, cholesterol has been used. In certain studies, cyclodextrins have been added to the freezing composition in order to improve the solubility of certain hydrophobic components. More recently, it has been proposed to replace egg yolk or phospholipids by a cyclodextrin-cholesterol complex in the freezing composition which shows an important protection of equine semen and significantly improves the semen quality after thawing (see D. Blommaert et al. Substitution of egg yolk by a cyclodextrin-cholesterol complex allows a reduction of the glycerol concentration into the freezing medium of equine sperm, Cryobiology 72 (2016) 27-32).

Cyclodextrin-cholesterol has already been added to a medium containing phospholipids or egg yolk and glycerol as described by Anim Reprod Sci. 2014 Mar;145(3-4):123-9. doi: 10.1016/j.anireprosci. 2014.01.013. Epub 2014 Feb 6: Cholesterol-loaded-cyclodextrins improve the post-thaw quality of stallion sperm, Murphy C¹, English AM¹, Holden SA¹, Fair S².

Glycerol which is most commonly used in known freezing compositions for many mammalian species has been found to show toxicity toward equine sperm at least, when used at too high a concentration, i.e. a concentration higher than 3,5 % by wt. Further, glycerol appears to show contraceptive effect at insemination when used at high concentrations in the freezing composition.

It is also known that the quality more specifically of equine semen decreases very rapidly after thawing, leading to the obligation to perform the insemination around the ovulation period of the female to obtain an acceptable rate of success. In order to avoid too severe a decrease in the semen quality after thawing, it has been recommended to start the freezing process shortly after the collection of stallion sperm samples.

There is thus still a need for improved cryopreservation compositions or freezing compositions for mammalian sperm, more specifically porcine, camel, bovine and equine sperm.

A further objective of the present invention is to provide cryopreservation compositions that show improved preservation of the sperm quality after thawing, compared to known freezing compositions.

Another objective of the present invention is to provide a cryopreservation composition that shows improved preservation of the sperm quality for a prolonged period of time after thawing

Another objective of the present invention is to provide a cryopreservation composition that shows improved preservation of the fertility of the sperm when inseminated.

Another objective of the present invention is to provide a cryopreservation composition that allows to delay the beginning of freezing process after the collection of sperm samples.

Another objective of the present invention is to provide a cryopreservation composition that allows for a higher concentration of spermatozoa by ml without affecting the quality of sperm after thawing.

The invention seeks to provide a soluble and stable solution ready to use or a kit for the preparation of the cryopreservation composition for the cryogenic preservation of mammalian sperm.

According to a further aspect, the invention seeks to provide a method for cryogenically preserving mammalian sperm thereby preserving sperm quality, sperm fertility and motility.

In a first aspect, the present invention provides a composition for cryopreservation of mammalian sperm, more specifically porcine, camel, bovine and equine sperm, comprising (i) a penetrating cryoprotecting agent that penetrates the sperm cell wall, selected within the group comprising a polyol having 4 - 7 C-atoms, and (ii) a cyclodextrin-cholesterol complex. Such compositions generally further comprise a buffer solution (also called electrolytes), antibacterial agents and antioxidants.

Such invention compositions may further comprise a protein source. The protein source may be selected from the group comprising plant proteins and animal proteins, hydrolysates (peptones) and derivatives thereof and combinations thereof. An enormous amount of literature dealing with the protein and/or phospholipid source is available to the skilled person. It would be inappropriate and inefficient to list them all. Preferred plant proteins may be selected from the group comprising wheat protein, whey protein, soya protein, more particularly soya lecithin, corn protein, peptones, derivatives thereof and combinations thereof. Preferred animal proteins may be selected from the group comprising egg protein, preferably egg white, milk or milk protein, albumin, serum, hydrolysates thereof (peptones) and derivatives thereof or combinations thereof.

A preferred protein source is casein, the most common form of which being Na-caseinate.

The proteins may be used at a concentration between 5 mg/ml and 500 mg/ml of the composition.

The invention freezing compositions may further comprise additional saccharides, such as glucose or lactose. Trehalose is also commonly used. The saccharides may be used at concentrations of 1 to 50 mg/ml of the composition.

In a preferred embodiment, the polyol has 5 - 7 C-atoms. Such polyols advantageously include, xylitol, mannitol, sorbitol and volemitol. In an even more preferred embodiment, the polyol has 6 carbon atoms. Most preferred polyols are selected from the group comprising mannitol and sorbitol. It has been found that such polyols play a cryogenic protective role within the cell, thereby further being a nutritional base as these polyols convert to saccharides. The selected polyols show less toxicity towards the sperm than glycerol. The relevant polyols further show less contraceptive effect at insemination.

The polyols may be used in concentrations ranging from 0.1 to 50 mg/ml of the composition, preferably from 0.2 to 25 mg/ml or 0.3 up to 20 mg/ml or 15 mg/ml or 10 mg/ml.

A preferred cyclodextrin- is the Beta hydroxypropyl cyclodextrin. The complex of such cyclodextrin with cholesterol constitutes a nutrient base as the cyclodextrin is a polysaccharide and the complex further constitutes a phospholipid source. The cyclodextrin-cholesterol complex may be prepared as described by Purdy and Graham, « Effect of adding cholesterol to bull sperm membranes on sperm capacitation, the acrosome reaction, and fertility », Biol.Reprod. 71 (2004) 522-527, as follows: 1g of 2-hydroxypropyl-beta-cyclodextrin (HPβCD) (Sigma-Aldrich, Bornem, Belgium) are dissolved in 2 mL methanol in a glass tube. A 450 µL aliquot of cholesterol (Sigma-Aldrich, Bornem, Belgium) dissolved in chloroform (200 mg/mL) is added to the cyclodextrin solution and then mixed. The solvents are removed by flushing with nitrogen gas and the resulting crystals (powder) are kept in an Eppendorf tube at 22 °C until use.

In the alternative, as the use of chloroform in the manufacturing process may not be ideal and since the drying under nitrogen flush takes time and may cause the formation of compact clots that are difficult to remove, an alternative method has been developed. That method makes use of only methanol as solvent to associate cholesterol with the 2-hydroxypropyl-beta-cyclodextrin (HPβCD) and to dry the preparation in a rotary evaporator. First, cholesterol (0.45 g) is added to methanol (10 ml) in a Berlin (50 ml), preferably containing a magnetic stirrer. The solution is mixed and heated, for example by means of a magnetic agitator equipped with a hot plate. The temperature of the methanol-cholesterol solution is progressively brought to the boiling point of methanol (64.7 °C) allowing the total solubilization of cholesterol. Concomitantly, HPβCD (5 g) is solubilized with 20 ml methanol under stirring, for instance in a 200 ml evaporator balloon. After total solubilization of both HPβCD and cholesterol, the warm solution of cholesterol-methanol is progressively added to the HPβCD-methanol solution under stirring. The resulting solution appears clear (without precipitate) and the balloon may be connected to a vacuum rotary evaporator with a water bath heated at about 40°C. After drying, methanol (10 ml) are added to the powder to remove any trace of water and the solution is dried again. After complete drying, the obtained powder is easily friable and detachable from the reactor surfaces (balloon). The resulting powder is preferably kept at ambient temperature (22 °C) until use.

The cyclodextrin-cholesterol complex may be used at rates of 0.5 to 200 mg/ml of composition, preferably at 0.5 to 160 mg/ml or 0.5 to 150 mg/ml or 1.0 to 140 mg/ml of the composition.

As mentioned above, the freezing compositions may comprise a buffer solution, antibacterial agents and/or antioxidants. The metabolism of the sperm cells generates an acidification of the extracellular medium which hence becomes toxic toward the sperm cells. Therefore, buffer solutions are provided for in order to maintain the extracellular medium close to neutral pH. The skilled person is capable of selecting proper buffer solutions. Among those, Tris or Hank's buffer are commonly used.

In order to avoid the extracellular medium to become a culture medium for bacteria of different origin, antibiotics are generally added to the invention freezing composition. Antibiotic families most commonly used are penicillin at rates of 10 to 1000 UI/ml and streptomycin at rates of 0,01 to 1 mg/ml streptomycin. Another advantageous antibiotic is amphotericin B (antifungy). Oxytetracycline may also be used, although less preferred.

Antioxidants are advantageously added to the freezing composition in order to counter oxidative stress and hence to improve sperm quality after thawing. Again, the skilled person will find a significant amount of antioxidants proposed for the instant application. Advantageous antioxidants are taurine, vitamin C, vitamin E, ergothionein, xanthurenic acid. In the case of equine sperm, broad spectrum antioxidants, like vitamin C and vitamin E have shown contradictory results.

It has been found that the invention composition is also suitable for the storage of fresh semen. It is actually common to store fresh semen in a storage medium for conservation during transport and to transfer the transported semen to another medium for freezing purposes. It will be easily understood by the skilled person that such method is time consuming, source of contamination and expensive. According to the invention, the same storage composition may be used for conservation during transport of fresh semen as well as for cryopreservation of semen.

As will also be understood from the Examples herein, the invention compositions improve the semen quality after thawing, when compared to known compositions. As discussed herein, the semen quality is expressed as viability, total and progressive motilities.

Further, it has been found that higher sperm concentrations may be used without affecting the semen quality, when compared to known compositions. As a result, one straw may be sufficient to constitute an appropriate insemination dose, while according to the art, 4 to 8 straws of 0,5 ml are required for one insemination dose.

Also, improved life time, total motility and progressive motility of sperm after thawing have been shown, each time compared to known compositions. The short life time after thawing of prior art compositions renders insemination difficult as insemination has to occur at ovulation of the female mammal. Extended life time at good sperm quality provides more flexibility with respect to the insemination process.

It is further notable that the time span between semen collection and freezing may be increased thereby still maintaining acceptable sperm quality after thawing. This advantage may be further emphasized when the same medium is used for conservation of fresh semen, prior to freezing (hence during transport), and for cryopreservation of the relevant semen.

In another aspect, the invention relates to a kit of parts comprising at least a first container containing (i) a penetrating cryoprotecting agent that penetrates the sperm cell wall, selected within the group comprising a polyol having 4 - 7 C-atoms, and (ii) a cyclodextrin-cholesterol complex and optionally a protein source. The kit may further comprise a second container comprising a buffer solution and possibly antibacterial agents and antioxidant. The kit advantageously comprises use directions recommending to combine the content of the first container with a commercial buffer solution and optionally antibacterial agents and antioxidant, or to combine the content of the first container with the content of the second container.

According to a preferred embodiment, the first container contains cyclodextrin-cholesterol complex as described above and a polyol and possibly protein source, in powder form. The powder may then be combined on site with a buffer solution at desired concentration, said buffer solution being either contained in a second container of the kit or a commercially available buffer solution, like INRA 96, for instance.

In yet another aspect, the invention relates to a method for cryogenically preserving mammalian sperm, comprising collecting fresh semen, combining said collected fresh semen with a freezing composition of the invention and freezing the combined semen and freezing composition. The freezing may be effected in a manner known per se. Generally, the semen is diluted as appropriate in the freezing composition, the diluted semen is placed in straws and the straws filled with diluted semen are subjected to an appropriate freezing curve, such as of -30 to -90 °C/s, preferably -60 °C/s, to reach -140 °C in a few seconds. As stated above, fresh semen is generally stored in a storage medium prior to being transferred to a freezing medium. According to the invention, fresh semen may be stored for transport in a freezing composition of the invention, at room temperature or at reduced temperature, prior to freezing, hence avoiding the use of a storage composition different from the freezing composition and hence avoiding transfer from the one into the other.

As used herein, the term "straw" is understood to mean a small storage receptacle used for the cryogenic storage of small samples of sperm. Several straws are stored in a freezing container.

As used herein, the term "sperm motility" is understood as a sperm quality criteria which describes the ability of the sperm to move properly through the female reproductive tract to reach the egg for purposes of fertilization. It is known that insufficient sperm motility is a reason for reduced fertility or even infertility.

Total motility was determined using 20 µl Leja cells in a computer assisted semen analysis (CASA) (IVOS version 12.0, Hamilton Thorne Research, Beverly, MA, USA). CASA settings were as follows: 37 °C, 60 frames per second (60 Hz), sperm size set between 4 and 6 pixels. The total motility was defined when the Velocity Average Path (VAP) was greater than 15 microns per second. The analysis was repeated twice in five different fields (10 repetitions for each analysis and a minimum of 600 analyzed spermatozoa).

Progressive motility was determined using 20 µl Leja cells in a computer assisted semen analysis (CASA) (IVOS version 12.0, Hamilton Thorne Research, Beverly, MA, USA). CASA settings were as follows: 37 °C, 60 frames per second (60 Hz), sperm size set between 4 and 6 pixels. The progressive motility was defined when the Velocity Average Path (VAP) was above 30 microns per second and straightness greater than 50 %. The analysis was repeated twice in five different fields (10 repetitions for each analysis and a minimum of 600 analyzed spermatozoa).

Velocities of spermatozoa. Curvilinear velocity (VCL) in micron/s is the time average velocity of the sperm head through its real path (actual curvilinear path) as perceived in two dimensions of the microscope. Straight line velocity (VSL) in micron/s is the time average velocity of the sperm head through the straight line connecting the first position of the last track and Average path velocity (VAP) in micron/s is the time average velocity of the sperm head through its average trajectory. This path is computed by smoothing the curvilinear trajectory according to algorithms in the CASA instrument.

Straightness (STR) is defined as the ratio in percent of VSL/VAP; VSL being the velocity curvilinear path.

Viability is defined as the percentage of spermatozoa that have an intact membrane.

The invention disclosed herein will be explained in more details in the Examples herein below, with reference to the attached figures, wherein:
- Fig. 1 is a diagram showing the viability, total and progressive motilities of stallion fresh semen 0, 24, 48 and 72h after incubation at 4°C;
- Fig. 2 is a diagram showing the viability, total and progressive motilities of frozen stallion spermatozoa 24, 48 and 72 h after incubation at 4°C;
- Fig. 3 is a diagram showing the viability, total and progressive motilities post freezing, at spermatozoa concentrations of 150, 300 and 450 million/ml;
- Fig. 4 is a diagram showing the viability, total and progressive motilities 0, 1, 2, 4, 8 and 24 h after thawing; and
- Fig. 5 is a diagram showing the viability, total and progressive motilities post freezing of stallion spermatozoa at a concentration of 300 million/ml.
- Fig. 6 is a diagram pertaining to Example 2, showing the viability, total and progressive motilities post freezing of stallion spermatozoa at a concentration of 150 million/ml in INRA Freeze and INRA 96 CDC+S .
- Fig. 7 is a diagram showing the viability, total and progressive motilities 1, 2, 4, 8 and 24 h after thawing in INRA Freeze and INRA 96 CDC+S .
- Fig. 8 is a diagram showing the viability, total and progressive motilities post freezing, at spermatozoa concentrations of 150, 300 and 450 million/ml in INRA 96 CDC+S;
- Fig. 9 is a diagram showing the viability, total and progressive motilities post freezing in the INRA 96 medium containing CDC and different polyols having 5 - 7 C-atoms.
- Fig. 10 is a diagram showing the viability, total and progressive motilities of stallion fresh semen 0, 24, 48 and 72h after incubation at 4°C in INRA Freeze, INRA 96 CDC+S and INRA 96 CDC+M
- Figure 11 shows the determination of viability, total and progressive motilities 0, 4, 8 and 24 hours after thawing of stallion spermatozoa frozen 24h after sampling in INRA Freeze and in INRA96 CDC+S or INRA 96 CDC+M.

### Example 1: Freezing composition for stallion semen preservation based on HP-beta-CDC mannitol

The preparation of this composition was performed in 3 steps consisting first in the preparation of a base salt solution, then the solubilization of the nutritional substrates, protective proteins and cryoprotecting agents with the base salt solution and finally, the addition of antibiotic and antifungal substances before the sterilization of the medium by filtration.

The base salt solution consists of a Hank's salt solution prepared as followed: 0.14 g CaCl₂, 0.40 g KCl, 0.06 g KH₂PO₄, 0.2 g MgSO₄.7H₂O, 1.25 g NaCl, 0.048 g Na₂HPO₄, 0.35 g NaHCO₃ and 4.76 g HEPES were combined to a final volume of 1000 ml with distilled water. Before adjustment of the volume, the pH of the solution was brought to 7.1 with KOH 5N followed by filtration with a corning filtration system (500 ml, Filter System, polystyrene, nonpyrogenic, sterile. Reference 431097 PES, Sterilizing Low protein binding, 0.22 µM). This solution was stored at 4 °C.

In a 11 Berlin flask, glucose (13.21 g), lactose (45.39 g) and sodium caseinate (13.5 g) were added. Under magnetic stirring, the base salt solution was progressively added to reach a volume of about 800 ml. When the solution appeared clear, the cryoprotective agents were added under stirring: mannitol (3 g) and cyclodextrin-cholesterol complex (CDC) (1.5 g). Following the complete dissolution of CDC, a slight precipitate appeared in the solution. Finally, the antibiotic and antifungal solutions were added in order to obtain in final concentrations 50 IU/ml penicillin, 50 µg/ml gentamicin and 0.25 µg/ml amphotericin B. The final volume was brought to 1000 ml with the base salt solution. The complete medium was sterilized by filtration with a corning filtration system (500 ml, Filter System, polystyrene, nonpyrogenic, sterile. Reference 431097 PES, Sterilizing Low protein binding, 0.22 µM). The filtered solution appeared clear and was stored at 4°C.

Semen from several stallions was collected several times a week. The stallions were known to produce frozen semen of acceptable quality (>30% of progressive motility) with the standard freezing technique making use of INRA Freeze. They were housed in individual boxes in the stables of Linalux- Mont-le-Soie (Vielsalm, Belgium). Horses received hay and a commercial concentrate twice daily (morning and evening). The stallions were collected with a minimum interval of two days on a phantom with an artificial vagina type Colorado (IMV Technologies, L'Aigle, France). Several ejaculates of each stallion were used in the study.

Once the ejaculate was collected, its volume was recorded. The sperm was kept in an incubator at a temperature of 37 °C and protected from light. The initial concentration of spermatozoa was determined using the NucleoCounter SP-100 solution with Chemometec detergent (CHEMOMETEC, Allerod, Denmark). The concentration of dead sperm was also determined with this device in order to determine viability of fresh semen, following manufacturer's instructions.

Thereafter, a sample of fresh semen was diluted to a concentration of 20 × 10⁶ total spermatozoa/mL in reference medium and in invention composition. The diluted sample was incubated for 5 min in the incubator at 37 °C, protected from light. Total and progressive motilities were determined using 20 µL Leja cells in a computer assisted semen analysis (CASA) (IVOS version 12.0, Hamilton Thorne Research, Beverly, MA, USA). CASA settings were as follows: 37 °C, 60 frames per second (60 Hz), sperm size set between 4 and 6 pixels. The total mobility was defined when the Velocity Average Path (VAP) was greater than 15 microns per second and progressive motility was defined when the VAP was above 30 µm per second and straightness greater than 50% (STR). The analysis was repeated twice in five different fields (10 repetitions for each analysis and a minimum of 600 analyzed spermatozoa).

Test of fresh stallion semen. Once the initial concentration of fresh semen was known, 2 Falcons of 15 mL containing 500 × 10⁶ spermatozoa/mL (1/4 semen + 3/4 of reference medium or invention composition) were prepared for each ejaculate then stored at 4°C. Viability, total and progressive motilities were measured as above 0, 24, 48, and 72h after the dilution of spermatozoa in the two media.

Test of frozen stallion semen. Once the initial concentration of fresh semen was known, 2 Falcons of 50 mL containing 500 × 10⁶ spermatozoa/mL (1/2 semen + 1/2 of reference medium or invention composition) was prepared for each ejaculate. A cushion medium, consisting of a Iodixanol solution (Maxifreeze, IMV Technologies, L'Aigle, France) was placed in the bottom of the tube (1.5 mL) using a spinal needle prior to centrifugation (1000 g, 20 min, 22 °C). Once this step completed, the supernatant was aspirated, leaving a maximum total volume of 3 ml of supernatant. The cushion medium was then removed and the remaining supernatant (2 mL) of each tube was mixed respectively with 5 mL of each freezing composition (CDC-mannitol of the invention and IF) and the number of spermatozoa was counted. For the spermatozoa concentration tests, after the removal of the cushion medium, and counting, the remaining supernatant of the tube was diluted with the adequate freezing extender at the following concentration: 150, 300 or 450 x 10⁶ spermatozoa/mL.

The Falcons containing the semen and the freezing extender were stored at 4 °C during 180 min. To avoid any temperature chock, empty straws of 0.5 mL were also stored in a refrigerator at 4 °C for 90, 120 and 180 min. Thereafter, the straws were filled and sealed with a semiautomatic machine (Minitüb, Tiefenbach, Deutschland). The straws were then sorted and placed in a freezing unit of an IceCube 14s (Minitüb, Tiefenbach, Deutschland). The applied freezing curves were those suggested for INRA Freeze (-60 °C per minute) allowing to obtain the temperature of -140 °C in 2.3 min. The straws were stored in liquid nitrogen.

Determination of semen quality after thawing: A straw of each condition was thawed in a water bath at 37 °C for 30 s and brought to a concentration of 20 x 10⁶ cells/mL in an Eppendorf tube in an oven at 37 °C, protected from light. Immediately thereafter, an adequate volume of the sample was drawn for the evaluation of viability and motility. This step was determined as the initial incubation time of the semen (T0). The same analyses were repeated on the same samples at T+1h, T+2h, T+4h, T+8h et T+24h to evaluate the post-thawing semen quality.

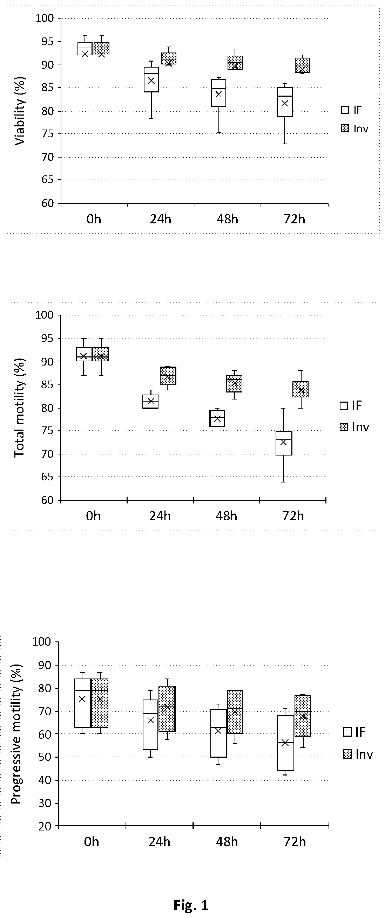

Figure 1 shows the determination of viability, total and progressive motilities of fresh stallion semen samples at 0, 24, 48 and 72 h after incubation in known IF (INRA Freeze) and invention composition. The spermatozoa concentration was 150 million/ml. Tests were carried out on 2 stallions, with 4 ejaculates per stallion. The results show that the quality parameters of the fresh spermatozoa diluted in INRA freeze (IF) and invention composition decrease with incubation time in both media but faster in IF than in the invention composition.

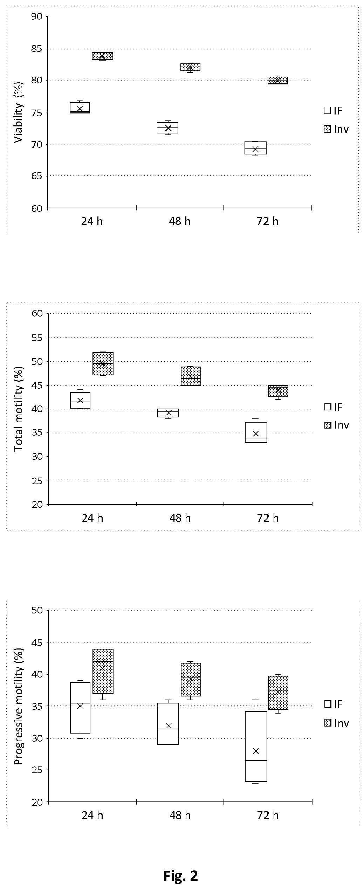

Figure 2 shows the determination of viability, total and progressive motilities of frozen stallion spermatozoa 24, 48 and 72 h after their incubation at 4°C with INRA freeze (IF) and invention composition. The spermatozoa concentration was at 150 million/ml. Tests were carried out on 2 stallions, with 4 ejaculates per stallion. The results show that the quality parameters (viability, total and progressive motilities) of spermatozoa are higher when they are frozen with the tested invention composition rather than with INRA freeze. The incubation time of spermatozoa with the medium before freezing induces a decrease of the quality parameters with both media but this decrease is slower with the invention composition.

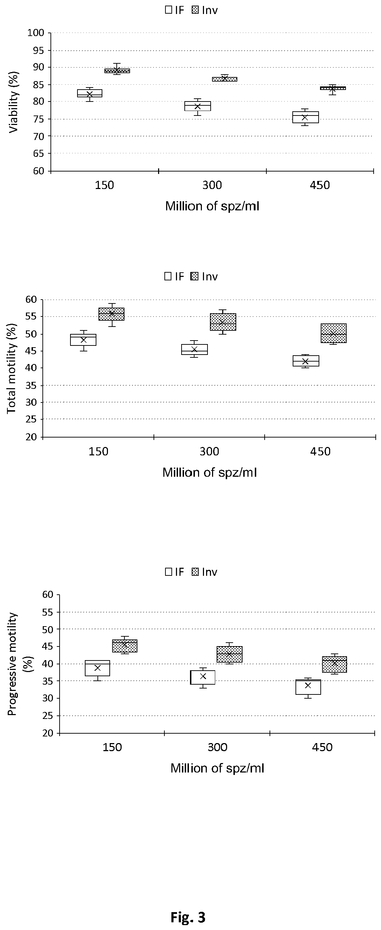

Figure 3 shows the determination of viability, total and progressive motilities post freezing of stallion spermatozoa in INRA freeze (IF) and in invention composition. The spermatozoa concentrations were 150, 300 and 400 million/ml. Tests were carried out on 3 stallions, with 3 ejaculates per stallion. The results show that the use of invention composition allows for better quality in terms of post freezing viability, total and progressive motilities of stallion spermatozoa than the use of INRA Freeze. The increase in spermatozoa concentration provides a slight decrease of the quality parameters in both media, but the effect is more pronounced when INRA Freeze is used.

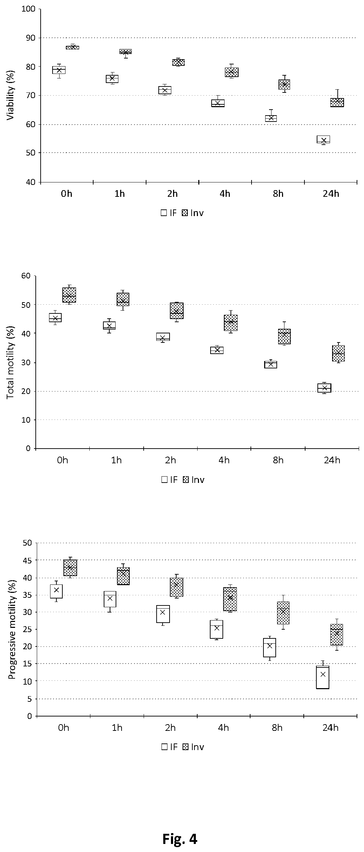

Figure 4 shows the determination of viability, total and progressive motilities 0, 1, 2, 4, 8 and 24 hours after thawing of stallion spermatozoa frozen in INRA freeze (IF) and in invention composition. The spermatozoa concentration was 300 million/ml. Tests were carried out on 3 stallions, with 3 ejaculates per stallion. The results show that the quality parameters decrease faster as a function of time when INRA Freeze is used than when the invention composition is used. After 24 h, the quality parameters have decreased by about 50 % in INRA Freeze. In contrast, they have decreased less than 50 % in invention composition.

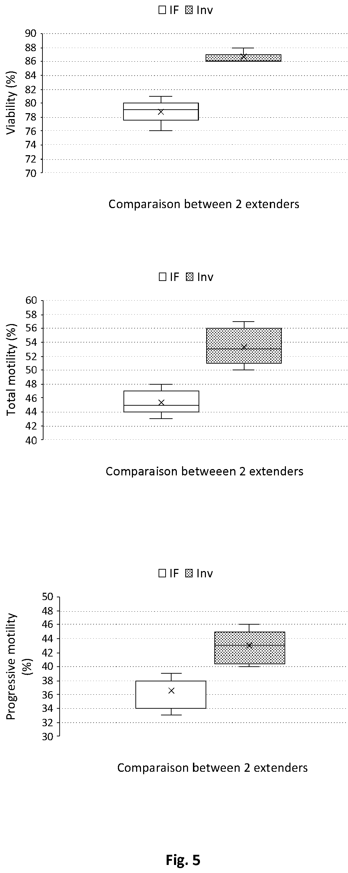

Figure 5 shows the determination of viability, total and progressive motilities post freezing of stallion spermatozoa frozen in INRA freeze (IF) and in invention composition. The spermatozoa concentration was 300 million/ml. Tests were carried out on 3 stallions, with 3 ejaculates per stallion. The results show that the use of invention composition allows for better quality (5 - 10%) in terms of post-freezing viability, total and progressive motilities of stallion spermatozoa, as compared to the use of INRA Freeze.

### Example 2: Evaluation of invention compositions for semen cryopreservation on horse semen.

Semen from five stallions was collected at a frequency of three times a week. The stallions were known to produce frozen semen of acceptable quality (>30% of progressive motility) with the standard freezing technique. They were housed in individual boxes in the stables of Linalux- Mont-le-Soie (Vielsalm, Belgium). Horses received hay and a commercial concentrate twice daily (morning and evening). The stallions were collected with a minimum interval of two days on a phantom with an artificial vagina type Colorado (IMV Technologies, L'Aigle, France). Three ejaculates of each stallion were used in the study.

Once the ejaculate was collected, its volume was recorded. The sperm was kept in an incubator at a temperature of 37 °C and protected from light. The initial concentration of spermatozoa was determined using the NucleoCounter SP-100 solution with Chemometec detergent (CHEMOMETEC, Allerod, Denmark). The concentration of dead sperm was also determined with this device in order to determine viability of fresh semen, following the manufacturer instructions.

Thereafter, a sample of fresh semen was diluted to a concentration of 20 × 10⁶ total spermatozoa/mL in a reference medium. The diluted sample was incubated for 5 min in the incubator at 37 °C, protected from light. Total and progressive motilities were determined using 20 µL Leja cells in a computer assisted semen analysis (CASA) (IVOS version 12.0, Hamilton Thorne Research, Beverly, MA, USA). CASA settings were as follows: 37 °C, 60 frames per second (60 Hz), sperm size set between 4 and 6 pixels. The total mobility was defined when the Velocity Average Path (VAP) was greater than 15 microns per second and progressive motility was defined when the VAP was above 30 µm per second and straightness greater than 50% (STR). The analysis was repeated twice in five different fields (10 repetitions for each analysis and a minimum of 600 analyzed spermatozoa).

The freezing extender CDC-sorbitol (CDC-S) was prepared with the reference medium added to 1.5 mg/mL of the 2-hydroxypropyl-beta-cyclodextrin cholesterol (HPβCD-C) complex and 3 mg/ml (16 mM) D-sorbitol (Sigma-Aldrich, Bornem, Belgium).

The freezing extender CDC-mannitol (CDC-M) was prepared with the reference medium added to 1.5 mg/mL of the 2-hydroxypropyl-beta-cyclodextrin cholesterol (HPβCD-C) complex and 3 mg/ml (16 mM) D-mannitol (Sigma-Aldrich, Bornem, Belgium).

The freezing extender CDC with other polyols (Xylitol or Volemitol) were prepared with the reference medium added to 1.5 mg/mL of the 2-hydroxypropyl-beta-cyclodextrin cholesterol (HPβCD-C) complex and 16 mM Xylitol or Volemitol (Sigma-Aldrich, Bornem, Belgium).

The above freezing extenders were compared to a commercial medium generally used for the freezing of stallion semen, that is the so-called "INRA Freeze" or IF (IMV Technologies, L'Aigle, France) which contains egg yolk and 2.5% glycerol.

Test of fresh stallion semen. Once the initial concentration of fresh semen was known, 3 Falcons of 15 mL containing 500 × 10⁶ spermatozoa/mL (1/4 semen + 3/4 of reference medium or INRA 96 CDC+S or INRA 96 CDC+M) were prepared for each ejaculate then stored at 4°C. Viability, total and progressive motilities were measured as above 0, 24, 48, and 72h after the dilution of spermatozoa in the two media.

Test of frozen stallion semen Once the initial concentration of fresh semen was known, Falcons of 15 mL containing 500 × 10⁶ spermatozoa/mL (1/2 semen + 1/2 reference medium) were prepared for each ejaculate. A cushion medium, consisting of an Iodixanol solution (Maxifreeze, IMV Technologies, L'Aigle, France) was placed in the bottom of the tube (0.5 mL) using a spinal needle prior to centrifugation (1000 g, 20 min, 22 °C). Once this step completed, the supernatant was aspirated, leaving a total volume of 1 ml of supernatant. The cushion medium was then removed and the remaining supernatant (0.5 mL) of each tube was mixed respectively with 2.5 mL of each freezing extender (IF, INRA 96 CDC+S, INRA 96 CDC+M, INRA 96 CDC+polyols) and the number of spermatozoa was counted. For the spermatozoa concentration tests, after the removal of the cushion medium, and counting, the remaining supernatant of the tube was diluted with the adequate freezing extender at the following concentration: 150, 300 or 450 x 10⁶ spermatozoa/mL.

The Falcons containing the semen and the freezing extender were stored at 4 °C during 180 min. To avoid any temperature chock, empty straws of 0.5 mL were also stored in a refrigerator at 4 °C for 90, 120 and 180 min. Thereafter, the straws were filled and sealed with a semiautomatic machine (Minitüb, Tiefenbach, Germany). The straws were then sorted and placed in a freezing unit of an IceCube 14s (Minitüb, Tiefenbach, Germany). The applied freezing curves were those suggested for INRA Freeze (-60 °C per minute) allowing obtaining the temperature of -140 °C in 2.3 min. The straws were stored in liquid nitrogen.

Determination of semen quality after thawing. A straw of each condition was thawed in a water bath at 37 °C for 30 s and brought to a concentration of 20 × 10⁶ cells/mL in an Eppendorf tube, in an oven at 37 °C, protected from light. Immediately thereafter, an adequate volume of the sample was drawn for the evaluation of viability and motility. This step was determined as the initial incubation time of the semen (T0). The same analyses were repeated on the same samples at T+1h, T+2h, T+4h, T+8h et T+24h to evaluate the post-thawing semen quality.

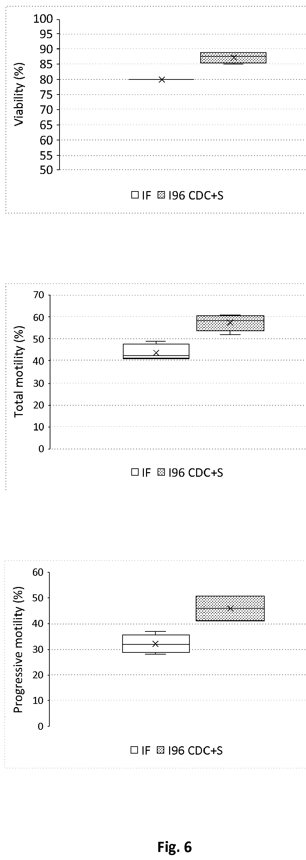

Preliminary Results: As can be seen in Figures 6 to 11, and as expected, the two media tested with CDC+S or CDC+M showed a significantly better sperm quality compared to the IF (INRA Freeze), immediately after thawing.

Figure 6 shows the determination of viability, total and progressive motilities post freezing of stallion spermatozoa frozen in INRA freeze (IF) and INRA96 CDC+S. The spermatozoa concentration was 150 million/ml. Tests were carried out on 2 stallions, with 2 ejaculates per stallion. The results show that the addition of CDC+S in the INRA96 medium allows for better quality (5 - 10%) in terms of post-freezing viability, total and progressive motilities of stallion spermatozoa, as compared to the use of INRA Freeze.

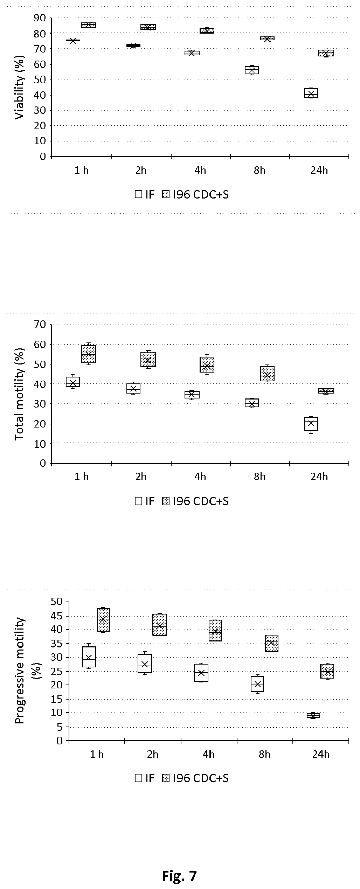

Figure 7 shows the determination of viability, total and progressive motilities 1, 2, 4, 8 and 24 hours after thawing of stallion spermatozoa frozen in INRA freeze (IF) and INRA96 CDC+S. The spermatozoa concentration was 150 million/ml. Tests were carried out on 2 stallions, with 2 ejaculates per stallion. The results show that the quality parameters decrease faster as a function of time when INRA Freeze is used than when invention composition INRA96 CDC+S is used. After 24 h, the quality parameters have decreased by about 50 % in INRA Freeze. In contrast, they have decreased less than 50 % in invention composition INRA 96 CDC+S.

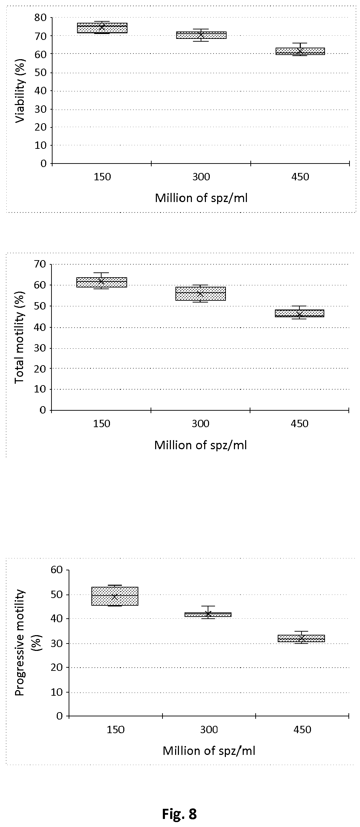

Figure 8 shows the determination of viability, total and progressive motilities post freezing of stallion spermatozoa in INRA 96 CDC+S. The spermatozoa concentrations were 150, 300 and 450 million/ml. Tests were carried out on 2 stallions, with 5 ejaculates per stallion. The results show that the increase in spermatozoa concentration provides a slight decrease of the quality parameters. The decrease between 150 million spz/ml and 450 million spz/ml was about 15 % for viability and total motility and about 20 % for progressive motility.

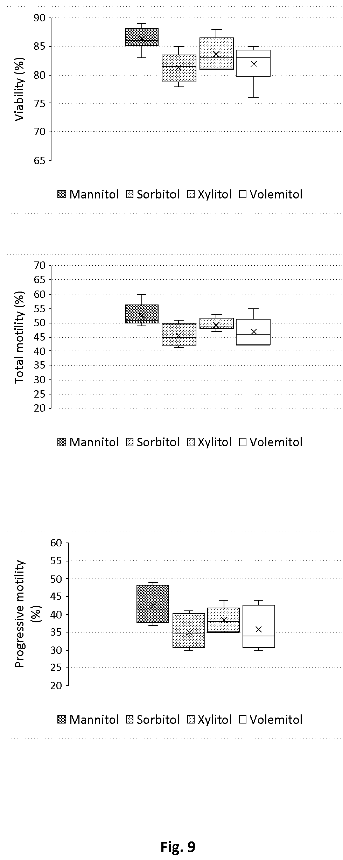

Referring to Figure 9, this figure shows the effect of the addition of different polyols at the same molar concentration (16 mM) on the INRA 96 medium containing 1.5 mg/ml of CDC on the viability, total and progressive motilities post freezing of stallion spermatozoa. The effect of Sorbitol (6 carbon chain) was compared with other polyols having a similar carbon chain (Mannitol), 5 carbon chain (Xylitol) or 7 carbon chain (Volemitol). The spermatozoa concentration was 150 million/ml. Tests were carried out on 2 stallions, with 3 ejaculates per stallion. The results show a quite similar effect of sorbitol with xylitol and volemitol. However, Mannitol allows an increase of all the quality Parameters.

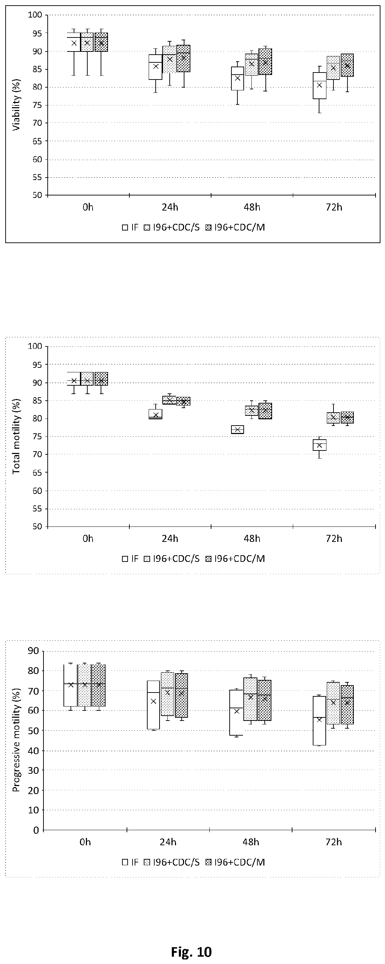

Figure 10 shows the determination of viability, total and progressive motilities of fresh stallion semen samples at 0, 24, 48 and 72 h after incubation in known IF (INRA Freeze) and INRA96 CDC+S or INRA 96 CDC+M. The spermatozoa concentration was 150 million/ml. Tests were carried out on 2 stallions, with 3 ejaculates per stallion. The results show that the quality parameters of the fresh spermatozoa diluted in INRA freeze (IF) and INRA96 CDC+S or INRA 96 CDC+M decrease with incubation time in both media but faster in IF than in the invention media.

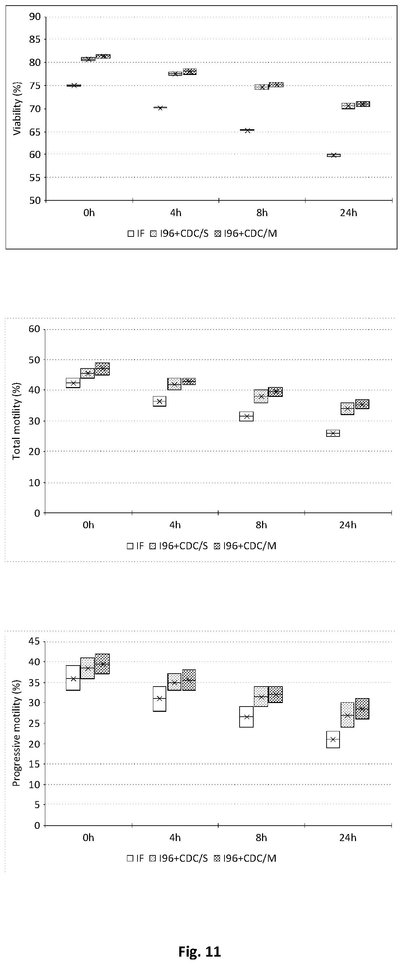

Figure 11 shows the determination of viability, total and progressive motilities 0, 4, 8 and 24 hours after thawing of stallion spermatozoa frozen 24h after sampling in INRA freeze (IF) and in INRA96 CDC+S or INRA 96 CDC+M. The spermatozoa concentration was 150 million/ml. Tests were carried out on 2 stallions, with 1 ejaculate per stallion. The results show that the quality parameters decrease faster as a function of time when INRA Freeze is used than when INRA96 CDC+S and INRA 96 CDC+M are used. After 24 h, the quality parameters have decreased by more than 10 % in INRA Freeze. In contrast, they have decreased by about 10 % in INRA96 CDC+S and INRA 96 CDC+M.

It is known that the sperm quality significantly decreases with increasing concentration. This effect was surprisingly not verified when the invention combinations were used. As a result, it was easy to get in a single straw the number of spermatozoa required for an optimal insemination dose (> 150 millions of progressive spermatozoa).

The quality of the sperms was found to be higher until 12 hours after thawing, when using CDC/S and CDC/M reference media. These results are obviously strategic for monitoring of the ovulation of each mare in oestrus. So far, due to the fast mortality of spermatozoids in commonly used media, the insemination had to be done around the ovulation. The present invention allows for more flexibility in this regard.

## Claims

1. A composition for cryopreservation of mammalian sperm comprising (i) a penetrating cryoprotecting agent that penetrates the cell wall, selected within the group comprising polyol having 4 - 7 C-atoms, and (ii) a cyclodextrin-cholesterol complex.

2. The composition of claim 1 comprising 0.1 - 50 mg/ml, preferably 0.2 - 25 mg/ml or 0.3 up to 20 mg/ml or 15 mg/ml or 10 mg/ml polyol.

3. The composition of claim 1 comprising 0.5 to 200 mg/ml cyclodextrin-cholesterol complex, preferably 0.5 to 160 mg/ml or 0.5 to 150 mg/ml or 1.0 to 140 mg/ml cyclodextrin-cholesterol complex.

4. The composition of claim 1 further comprising 5-500 mg/ml of a protein source.

5. The composition of claim 3 wherein the protein source is selected from plant proteins and animal proteins, such as wheat protein, soya protein, corn protein, egg protein, milk protein, whey protein albumin serum, derivatives thereof and combinations thereof.

6. The composition of claim 3 wherein the protein source is casein, preferably sodium caseinate.

7. The composition of any preceding claim further comprising 1 - 50 mg/ml saccharides, such as glucose or lactose, preferably 5 to 40 mg/ml saccharides.

8. The composition of any preceding claim further comprising one or more additives selected from antibacterial agents, buffer compositions and antioxydants.

9. The composition of any of claim 1 or 6 wherein the polyol is selected from the group comprising erythritol, xylitol, mannitol, sorbitol and volemitol, preferably mannitol or sorbitol.

10. The composition of claim 1 wherein the cyclodextrin-cholesterol complex is beta-hydroxypropyl-cyclodextrin-cholesterol.

11. Kit of parts comprising at least a first container containing (i) a penetrating cryoprotecting agent that penetrates the sperm cell wall, selected within the group comprising a polyol having 4 - 7 C-atoms, and (ii) a cyclodextrin-cholesterol complex and optionally a protein source and saccharides, preferably in powder form; possibly a second container comprising a buffer solution and possibly antibacterial agents and antioxidant; and possibly use directions recommending to combine the content of the first container with a commercial buffer solution and optionally antibacterial agents and antioxidant, or to combine the content of the first container with the content of the second container, as appropriate.

12. Method for cryogenically preserving mammalian sperm, comprising collecting fresh semen, combining said collected fresh semen with a freezing composition of any of claims 1 - 10 and freezing the combined semen and freezing composition in a manner known per se.

13. Method according to claim 12 wherein the semen is diluted as appropriate in the freezing composition, the diluted semen is placed in straws and the straws filled with diluted semen are subjected to an appropriate freezing curve, such as of -30 to -90 °C/s, preferably -60 °C/s, to reach -140 °C in a few seconds.

14. Use of a composition according to any of claims 1 - 10 for storage and/or transport of fresh semen under ambient or cooled temperature (above freezing point).

15. Process for the preparation of a cyclodextrin-cholesterol complex comprising the steps of adding cholesterol to methanol, preferably under stirring, mixing and heating the solution, progressively raising the temperature of the methanol-cholesterol solution to the boiling point of methanol thereby allowing for complete solubilization of cholesterol; solubilizing cyclodextrin in methanol, preferably under stirring, progressively adding the solution of cholesterol-methanol to the cyclodextrin-methanol solution, preferably under stirring, and drying, preferably under vacuum.
